# EUROPÄISCHE PATENTSCHRIFT

(11) **EP 0 541 627 B1**
(45) Veröffentlichungstag und Bekanntmachung des Hinweises auf die Patenterteilung: **14.09.1994**
(21) Anmeldenummer: 91913833.9
(22) Anmeldetag: 27.07.1991
(51) Int. Cl.: F16D 41/06, F16D 41/07, F16D 41/08, F16D 41/10, F16D 41/02, F16D 15/00

(54) **SCHALTBARER KLEMMKÖRPERFREILAUF**
SWITCHABLE FREEWHEEL WITH LOCKING ELEMENTS
DISPOSITIF DE ROUE LIBRE COMMUTABLE A ELEMENTS DE BLOCAGE

(30) Priorität: 02.08.1990 DE 4024616; 10.06.1991 DE 4119095
(43) Veröffentlichungstag der Anmeldung: 19.05.1993
(73) Patentinhaber: INA Wälzlager Schaeffler KG, 91063 Herzogenaurach (DE)
(72) Erfinder: STARK, Johann, D-8552 Höchstadt (DE); RITTER, Joachim, D-8522 Herzogenaurach (DE)
(86) Internationale Anmeldenummer: EP9101411
(87) Internationale Veröffentlichungsnummer: WO9202742

(56) Entgegenhaltungen:
- DE-A- 3 307 824
- FR-A- 667 440
- US-A- 2 991 861
- US-A- 3 008 559
- US-A- 3 017 964
- US-A- 3 976 175
- PATENT ABSTRACTS OF JAPAN, vol. 9, no. 117(M-381)(1840) 22 May 1985; & JP-A-60004630

## Beschreibung

Die Erfindung betrifft einen schaltbaren Klemmkörperfreilauf gemäß Oberbegriff des Anspruchs 1.

Es ist zwar bereits ein Klemmkörperfreilauf, der in beiden Richtungen wirksam ist, aus der EP-A-0 182 994 bekannt, hierbei werden jedoch zwei Klemmkörperfreiläufe nebeneinander, gegeneinander wirkend eingesetzt. Das Freischalten erfolgt radial über Reibschluß der beiden Freiläufe und elastische Durchmesserverformung der Laufbahn. Dieser Freischalt- bzw. Umschaltmechanismus ist sehr aufwendig und nur schwierig zu beherrschen.

Der Erfindung liegt daher die Aufgabe zugrunde, den Freilauf der eingangs bezeichneten Gattung so auszubilden, daß bei einfachstem Konstruktionsaufwand und geringst möglicher Baugröße eine Wirksamkeit in beiden Richtungen mit einfacher Umschaltmöglichkeit zwischen diesen erzielbar ist.

Diese Aufgabe löst die Erfindung gemäß Anspruch 1 dadurch, daß wenigstens einer der Käfigringe eine Anlage aufweist, die bei relativer axialer Verschiebung der Käfigringe entlang einer am jeweils anderen Käfigring vorgesehenen, zur Freilaufachse schrägen Fläche derart geführt ist, daß diese Käfigringe sich in Umfangsrichtung zueinander verdrehen und dabei die Klemmkörpern zum Schalten des Freilaufs kippen.

Es ist in vorteilhafter Weise auch möglich, einen der beiden Käfigringe aus einzelnen Segmenten herzustellen, wobei jedes einzelne Segment zwischen in Umfangsrichtung einander benachbarten Klemmkörpern angeordnet ist.

Insbesondere kann die schräge Fläche an dem einen der beiden Käfigringe angeordnet und die Anlage ebenfalls als zur Freilaufachse schräge Fläche gestaltet und am jeweils anderen Käfigring angeordnet sein. Dies bietet die Möglichkeit zu einer besonders einfachen Gestaltung in der Form, daß die beiden schrägen Flächen der beiden Käfigringe als Schiebekulisse mit Nut an einem Käfigring und selber am anderen Käfigring ausgebildet sein können.

Eine besonders günstige Ausbildung ist dadurch erreichbar, daß die zuvor angesprochenen schrägen Flächen als räumlich gekrümmte oder gewendelte und zueinander form- oder reibschlüssige Flächen ausgebildet sind, die aneinander anliegen. Der hierdurch erreichte Vorteil besteht in einer Vergrößerung des tragenden Teils der Flächen.

Die der Erfindung zugrundeliegende Aufgabe wird gemäß Anspruch 5 auch dadurch gelöst, daß wenigstens einer der Käfigringe wenigstens eine Anlage aufweist, und daß wenigstens einer der Klemmkörper an seiner der Anlage zugewandten axialen Seite einen sich in Axialrichtung verjüngenden Ansatz mit einer zur Freilaufachse schrägen Fläche aufweist, wobei bei relativer axialer Verschiebung der Käfigringe die Anlage entlang der schrägen Fläche bei gleichzeitigem Verkippen des Klemmkörpers zum Zweck des Schaltens des Freilaufs bewegt wird.

Bei derartig ausgeführten Klemmkörperfreiläufen werden die Käfigringe lediglich axial verschoben. In diesem Fall kann in besonders vorteilhafter Weise ein zweiter einer Klemmkörpertasche zugewandter Axialausschnitt mit Radialkante als Anlage und ein zweiter in Axialrichtung verjüngter Ansatz an der dem zweiten Axialausschnitt zugewandten Seite eines Klemmkörpers vorgesehen sein. Dabei dienen der Axialausschnitt bzw. die zugehörige Anlage zur Schaltung in der einen Richtung, während der zweite Ausschnitt bzw. die zugehörige Anlage zur Schaltung in der anderen Richtung dienen.

Auf diese Ausbildung beruht die Möglichkeit zweier alternativer Weiterbildungen, nämlich einerseits, daß beide Axialausschnitte an demselben Käfigring, jedoch gesehen von den Klemmkörpern aus an unterschiedlichen Seiten angeordnet und die beiden verjüngten Ansätze an unterschiedlichen Axialseiten der Klemmkörper angeordnet sind und andererseits, daß die beiden Axialausschnitte an unterschiedlichen Käfigringen und dort in Umfangsrichtung gegeneinander versetzt und die beiden verjüngten Ansätze an den Klemmkörpern dort an gleichen Axialseiten angeordnet sind. Beide Alternativen bieten den Vorteil sehr geringer Baugröße bei einfachster Konstruktion.

Schließlich kann bei beiden Lösungsvorschlägen zwischen den beiden Käfigringen eine in Axialrichtung auf diese einwirkende Feder vorgesehen sein, über die der Freilauf aus einer seiner beiden Schaltstellungen in die Freilaufstellung oder aus der einen Schaltstellung bzw. der Freilaufstellung in die andere Schaltstellung geschaltet ist, wenn nicht von außen axial auf einen der Käfigringe eingewirkt wird.

Im folgenden wird die Erfindung unter Bezugnahme auf die Zeichnungen und dabei zugleich ausschließlich beispielhaft im Detail beschrieben; in den Zeichnungen zeigen:
- Figur 1: perspektivisch einen Teilbereich von zwei Käfigringen mit Kulissenverstellung und einen Klemmkörper,
- Figur 2: eine grundsätzlich ähnliche Ausbildung allerdings mit axial wirkender Feder zwischen den beiden Käfigringen,
- Figur 3: perspektivisch einen Teilbereich von zwei Käfigringen und zwei Klemmkörper bei der Ausbildung von zwei zu unterschiedlichen Seiten einer Klemmkörpertasche angeordneten Axialausschnitten in dem einen Käfigring und mit verjüngten Ansätzen der Klemmkörper in Zuordnung zu den Axialausschnitten,
- Figur 4: perspektivisch einen Teilausschnitt mit drei Käfigringen und einem Klemmkörper mit zwei kegelförmigen Ansätzen an derselben Stirnseite,

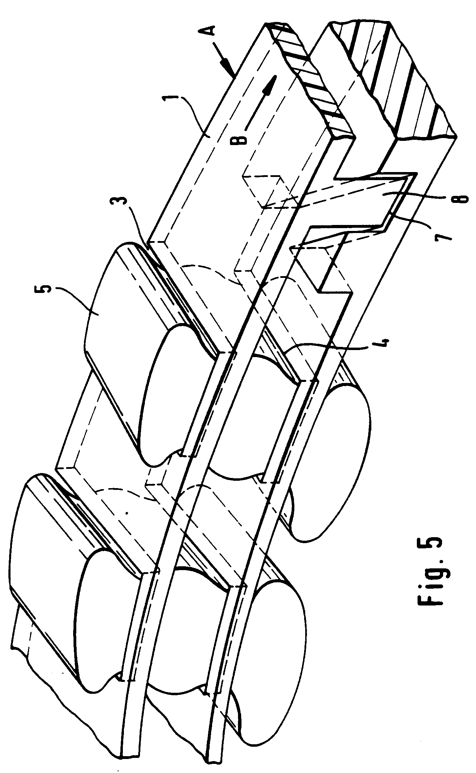

- Figur 5: eine Ausführungsform ähnlich der der Figur 2 jedoch mit Klemmwirkung nur in einer Richtung,
- Figur 6: eine Einzelheit einer Ausführungsform ähnlich der der Figur 2 jedoch mit einer direkt auf zwei einander benachbarte Klemmkörper einwirkenden Feder,
- Figur 7: einen axialen Teilschnitt durch eine Ausführungsform mit Außenhülse und innerem Gleitlager,
- Figur 8: einen axialen Teilschnitt durch eine Ausführungsform mit Außenhülse und innerem Wälzlager und
- Figur 9: perspektivisch einen Teilbereich von zwei Käfigringen, wobei einer der Käfigringe aus einzelnen Segmenten besteht.

Bei allen in den Figuren dargestellten Ausführungsformen besteht der Klemmkörperfreilauf aus zwei Käfigringen 1 und 2 mit in diesen vorgesehenen Taschen 3 bzw. 4 Aufnahme von Klemmkörpern 5 bzw. 6. Die den Klemmflächen der Klemmkörper 5, 6 zugewandten Flächen zugehöriger Klemmringe sind nicht dargestellt; diese Klemmringe können in der Form von Hülsen Bestandteil des Freilaufs sein oder Bestandteil der Aggregate sein, zwischen die der Freilauf einzusetzen ist.

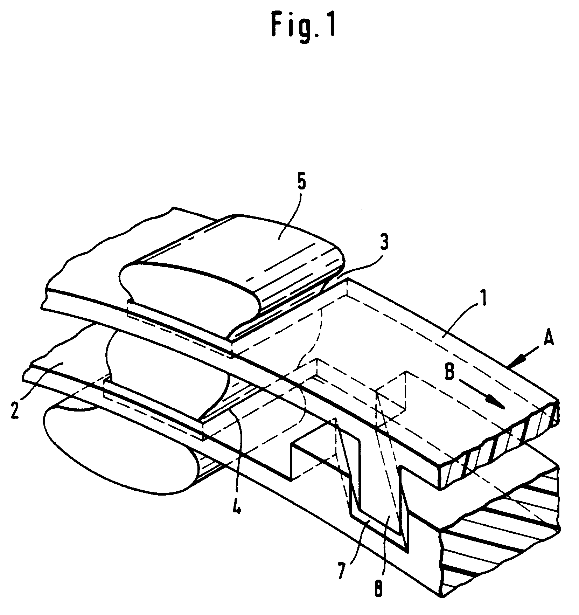

Bei der Ausführung gemäß Figur 1 dient für die Umsetzung der Axialbewegung beispielsweise des Käfigrings 1 relativ zum Käfigring 2 zwecks Relativverdrehung der beiden Käfigringe und damit Verschwenkung der Klemmkörper 5 zwecks Schaltung des Freilaufs eine Schiebekulisse in der Form einer Nut 7 an der Außenkante des Käfigringes 2 und einer zugehörigen Feder 8 an der Innenseite des Käfigringes 1. Nut 7 und Feder 8 sind zur Längsachse des Freilaufs schräggestellt, so daß bei Axialverschiebung des Käfigrings 1 in Richtung des Pfeiles A dieser Käfigring zugleich in Richtung des Pfeiles B relativ zum Käfigring 2 verdreht wird.

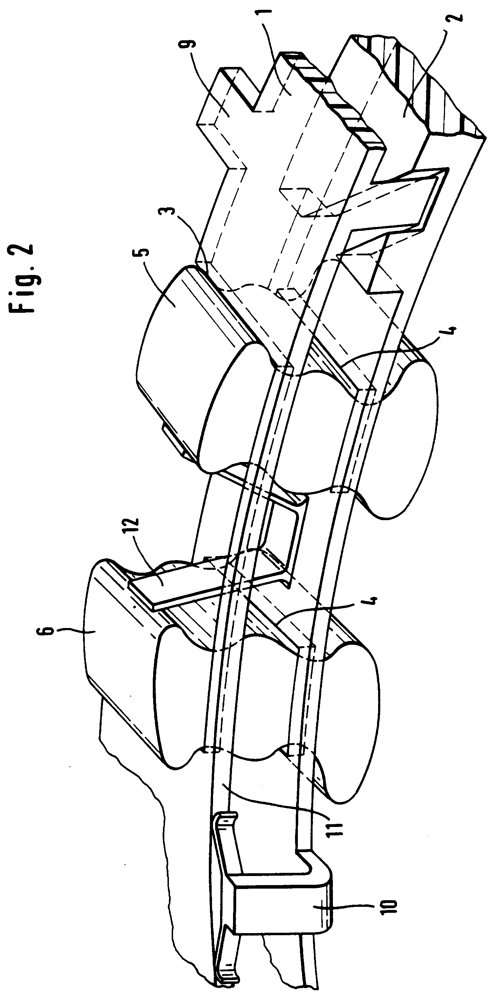

Die Ausführungsform der Figur 2 zeigt darüberhinaus eine Schaltnocke 9 am Käfigring 1 zur Bewirkung seiner Axialverschiebung und eine zwischen den beiden Käfigringen 1 und 2 wirkende Axialfeder 10. Letzterer ist Bestandteil des Käfigrings 2 und drückt mit ihrem freien Ende gegen die axiale Stirnfläche 11 des Käfigrings 1. Die Axialverschiebung des Käfigrings 1 über den Schaltnocken 9 erfolgt also entgegen der Wirkung der Feder 10. Im übrigen sind die beiden dargestellten Klemmkörper 5 und 6 jeweils entgegengesetzt gerichtet in Taschen 4 der beiden Käfigringe 1, 2 eingesetzt und dabei durch eine Spreizfeder auseinandergespreizt. Die entgegengesetzte Ausrichtung der Klemmkörper 5, 6 dient der Umschaltbarkeit des Freilaufs in entgegengesetzte Wirkrichtungen. Sind die Klemmkörper 5, 6 beispielsweise gemäß 5 nicht zueinander entgegengesetzt ausgerichtet, so eignet sich der Freilauf auch zum Antrieb in nur einer Drehrichtung.

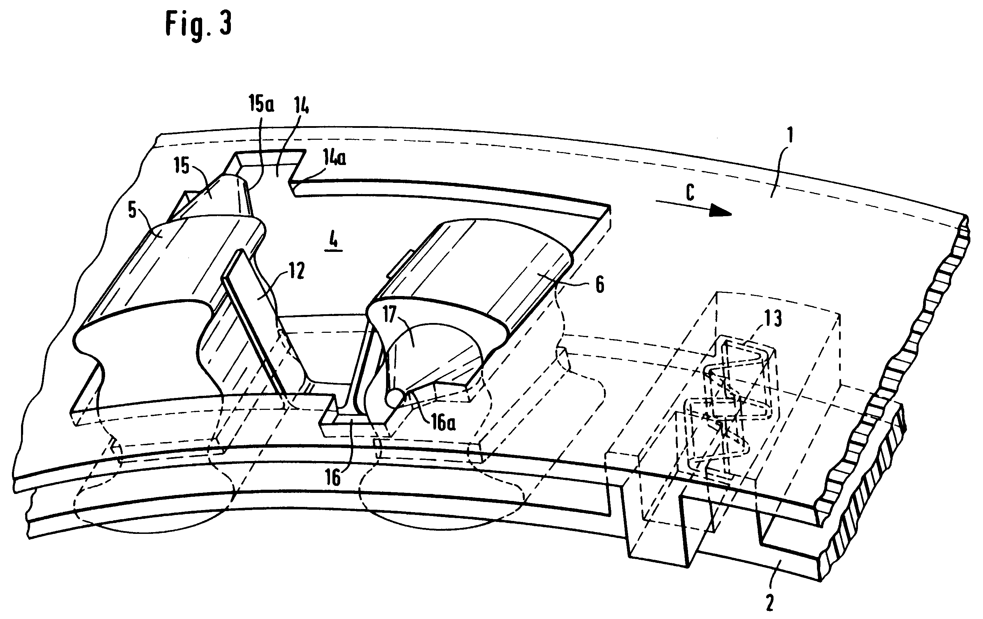

Bei der Ausführungsform der Figur 3 ist anstelle der Bestandteil des Käfigrings 1 bildenden Feder 10 gemäß Figur 2 eine Spreizfeder zwischen die Käfigringe 1 und 2 eingesetzt. Bei dieser Ausführungsform dient zur Umsetzung der Axialbewegung des Käfigrings 1 in eine Drehbewegung ein Axialausschnitt 14 im Käfigring 1 in Verbindung mit einem verjüngten Ansatz 15 mit schräger Fläche 15a an der dem Ausschnitt 14 zugewandten Seite des Klemmkörpers 5. Ein weiterer gleichartiger Ausschnitt 16 ist an der gegenüberliegenden Seite der Tasche 4 in Verbindung mit einem Ansatz 17 am Klemmkörper 6 vorgesehen. Während der Ausschnitt 14 über seine Radialkante 14a mit dem Ansatz 15 bzw. mit dessen schräger Fläche 15a zur Verstellung des Käfigrings 1 in Richtung des Pfeils C dient, ist der Ausschnitt 16 über seine Radialkante 16a mit dem Ansatz 17 zur Verstellung in entgegengesetzter Richtung bestimmt. Auch in diesem Fall ist analog zu Figur 2 eine Spreizfeder 12 vorgesehen.

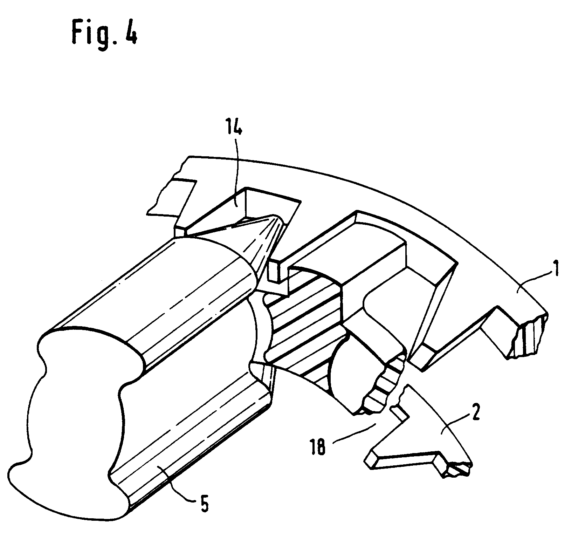

In Figur 4 sind zwei Schaltringe dargestellt, die die Klemmkörper in Umfangsrichtung verdrehen und sich am Haltering (Klemmkörperführungskäfig) abstützen. Die räumlich gekrümmten Flächen oder Schrägen können so ausgebildet sein, daß eine Verdrehung der Klemmkörper über die zwei Schaltringe an den beiden Klemmkörperkegeln unterstützt wird. Eine andere Möglichkeit sind die gegeneinander wirkenden, schrägen Flächen der Schalt- bzw. Klemmkörperringe 1 und 2. Hierdurch kann durch axiale Verschiebung, z. B. des Klemmkörperringes 1 der Klemmkörper in Klemmstellung gebracht werden. Die für diese Funktionen benötigte Klemmkörperanfederung bzw. Rückstellfedern der Klemmkörperringe 1 und 2 sind nicht dargestellt.

Bei der Ausführungsform gemäß Figur 4 sind wiederum Axialausschnitte 14 im Käfigring 1 vorgesehen, während anstelle der Ausschnitte 16 an der gegenüberliegenden Seite des Käfigrings 1 hier Ausschnitte 18 am Käfigring 2 vorgesehen sind, und zwar dort an der Seite, die der Seite des Käfigrings 1 entspricht, an der dort die Ausschnitte 14 vorgesehen sind. In diesem Fall sind die Ausschnitte 14 und 18 nicht als rechteckige Ausschnitte wie gemäß Figur 3 ausgebildet, sondern als in Richtung auf die Tasche 4 der Käfigringe 1 und 2 erweiterte, also trapezförmige Ausschnitte.

In den Fällen der Figur 1 und 2 ist eine Umsetzung der Axialbewegung des Käfigrings 1 relativ zum Käfigring 2 in eine Relativverdrehung der beiden gewährleistet, wodurch die Klemmkörper 5, 6 um ihre Längsachse verschwenkt werden und damit aus einem Schaltzustand in den Freilaufzustand bzw. umgekehrt bewegt werden, wobei der Schaltzustand bedeutet, daß die Klemmkörper 5, 6 an den nicht dargestellten Klemmflächen anliegen; dies allerdings bei geringer Baugröße und im Prinzip einfachster Bauweise.

Ganz generell gilt, daß zur Erzielung einer möglichst langen Lebensdauer und im übrigen auch einer geringeren Axialschaltkraft des Freilaufs die an Schaltvorgängen beteiligten Umlenkflächen werkstoffspezifisch besonders verschleißfest ausgebildet sein sollten; bei entsprechend geeigneter Gestaltung dieser Flächen, so beispielsweise im Fall der Figur 1 mit der Schiebekulisse mit Nut und Feder, können auch Wälzkörper zwischen die Paarungsflächen eingesetzt werden.

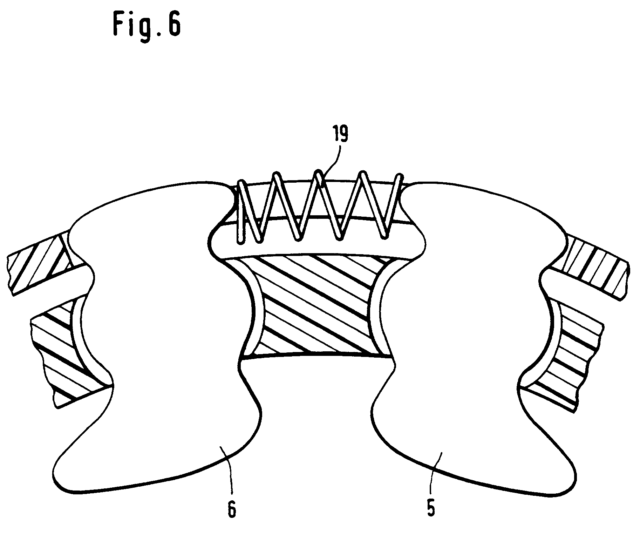

Die in Figur 6 dargestellte Einzelheit zweigt die Anordnung einer Spreizfeder 19 wiederum unmittelbar zwischen zwei einander benachbarten Klemmkörpern 5, 6; jedoch ist die Spreizfeder 19 in diesem Fall weder Bestandteil eines der Klemmringe 1, 2 noch an einem derselben abgestützt.

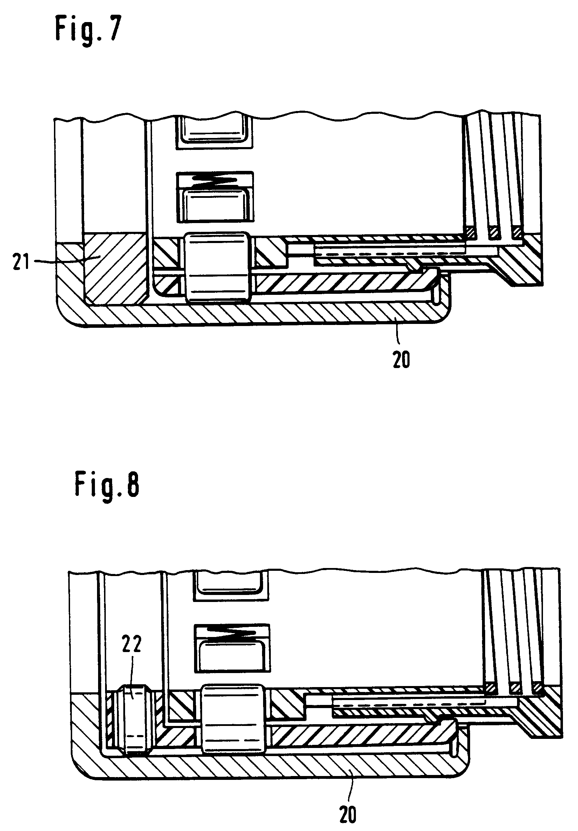

Die Figuren 7 und 8 zeigen je eine Hälfte eines Axialschnittes durch einen Freilauf, der in einer Hülse 20 eingebaut ist, wobei gemäß Figur 7 ein Gleitlager 21 und gemäß Figur 8 ein Wälzlager 22 jeweils stirnseitig des eigentlichen Freilaufes vorgesehen ist, das dabei der inneren Umlauffläche der Hülse 20 zugeordnet ist.

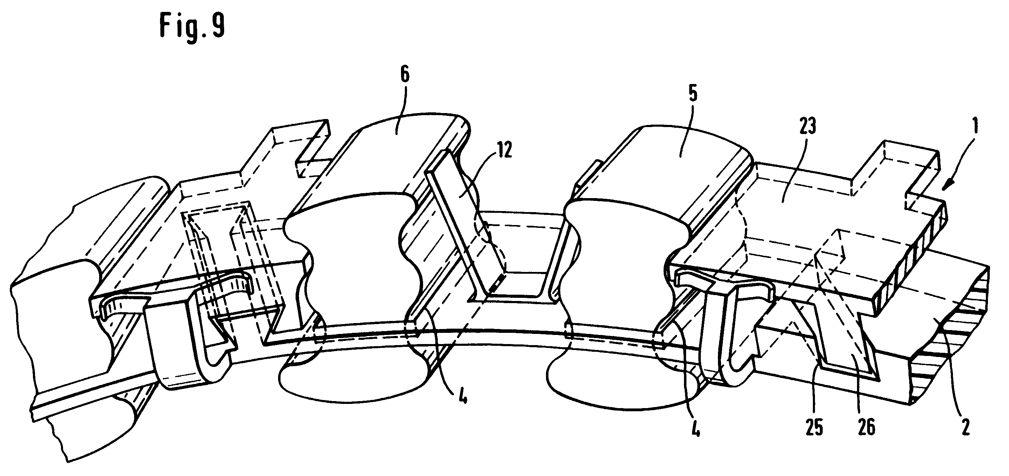

Die Figur 9 zeigt perspektivisch einen Teilbereich von zwei Käfigringen 1, 2, wobei der Käfigring 1 aus den Segmenten 23, 24 besteht. Das Segment 23 ist dabei ein Abschnitt des in Figur 2 dargestellten Käfigrings 1. Auch die in Figur 2 dargestellte Ausbildung von Klemmkörpern 5 und 6 findet Anwendung bei dem Ausgestaltungsbeispiel in Figur 9. Das weitere Segment 24 ist alternativ zur Ausbildung des Segments 23, welches eine Nut 25 und eine Feder 26 aufweist, in Form einer Schwalbenschwanzführung ausgestaltet.

## Patentansprüche

1. Schaltbarer Klemmkörperfreilauf, mit zwei zueinander konzentrischen Käfigringen (1, 2) und in Taschen (3, 4) derselben untergebrachten Klemmkörpern (5, 6), die infolge einer relativen Verschiebung der Käfigringe (1, 2) ihre Klemmstellung verändern, **dadurch gekennzeichnet,** daß wenigstens einer der Käfigringe (1, 2) eine Anlage (8) aufweist, die bei relativer axialer Verschiebung der Käfigringe (1, 2) entlang einer am jeweils anderen Käfigring (1, 2) vorgesehenen, zur Freilaufachse schrägen Fläche (7) derart geführt ist, daß diese Käfigringe (1, 2) sich in Umfangsrichtung zueinander verdrehen und dabei die Klemmkörper (1, 2) zum Schalten des Freilaufs kippen.

2. Freilauf nach Anspruch 1, **dadurch gekennzeichnet**, daß die Anlage (8) ebenfalls als zur Freilaufachse schräge Fläche gestaltet ist.

3. Freilauf nach Anspruch 2, **dadurch gekennzeichnet**, daß die schräge Fläche (7) und die als schräge Fläche ausgebildete Anlage (8) als Schiebekulisse mit Nut (7) an dem einen Käfigring (2) und Feder (8) an dem anderen Käfigring (1) ausgebildet ist.

4. Freilauf nach Anspruch 2, **dadurch gekennzeichnet**, daß die schrägen Flächen als räumlich gekrümmte und zueinander form- oder reibschlüssige Flächen ausgebildet sind, die wendelartig aneinander anliegen.

5. Schaltbarer Klemmkörperfreilauf mit zwei zueinander konzentrischen Klemmringen (1, 2) und in Taschen (3, 4) derselben untergebrachten Klemmkörpern (5, 6), die infolge einer relativen Verschiebung der Käfigringe (1, 2) ihre Klemmstellung verändern, **dadurch gekennzeichnet**, daß wenigstens einer der Käfigringe (1, 2) wenigstens eine Anlage (14, 14a, 16, 16a) aufweist, und das wenigstens einer der Klemmkörper (5, 6) an seiner der Anlage (14, 14a, 16, 16a) zugewandten axialen Seite einen sich in Axialrichtung verjüngenden Ansatz (15, 17) mit einer zur Freilaufachse schrägen Fläche (15a, 17a) aufweist, wobei bei relativer axialer Verschiebung der Käfigringe (1, 2) die Anlage (14, 14a, 16, 16a) entlang der schrägen Fläche (15a, 17a) bei gleichzeitigem Verkippen des Klemmkörpers (5, 6) zum Zweck des Schaltens des Freilaufs bewegt wird.

6. Freilauf nach Anspruch 5, **dadurch gekennzeichnet**, daß die Anlage in der Radialkante (14a, 16a) eines einer Klemmkörpertasche (4) zugewandten Axialausschnitts (14, 16) des einen Käfigringes (1, 2) oder in einer räumlich gekrümmten Fläche des Axialausschnitts (14, 16) besteht.

7. Freilauf nach Anspruch 6, **dadurch gekennzeichnet**, daß der eine Käfigring (1) zwei einer Klemmkörpertasche (4) zugewandte Axialausschnitte (14, 16) mit Radialkanten (14a, 16a) aufweist, wobei der eine Axialausschnitt (16) an der einen und der andere Axialausschnitt an der anderen axialen Seite der Klemmkörpertasche (4) ausgebildet ist, in der zwei Klemmkörper (5, 6) mit jeweils an einer ihrer Axialseiten ausgebildeten, den beiden Axialausschnitten (14, 16) zugewandten Ansätzen (15, 17) angeordnet sind.

8. Freilauf nach Anspruch 6, **dadurch gekennzeichnet**, daß die beiden Axialausschnitte (14, 18) an unterschiedlichen Käfigringen (1, 2) und dort in Umfangsrichtung gegeneinander versetzt und die beiden verjüngten Ansätze an den Klemmkörpern (5) dort an gleichen Axialseiten angeordnet sind.

9. Freilauf nach mindestens einem der vorhergehenden Ansprüche, **gekennzeichnet durch** eine zwischen den beiden Käfigringen (1, 2) in Axialrichtung auf diese einwirkende Feder (10, 13).

10. Freilauf nach Anspruch 9, **dadurch gekennzeichnet**, daß die Feder (10) Bestandteil eines Käfigringes (2) ist und mit ihrem freien Ende axial gegen den anderen Käfigring (2) drückt.

11. Freilauf nach wenigstens einem der vorhergehenden Ansprüche, **dadurch gekennzeichnet**, daß einer der beiden Käfigringe (1, 2) aus einzelnen Segmenten (23, 24) besteht, wobei jedes der einzelnen Segmente (23, 24) zwischen in Umfangsrichtung einander benachbarten Klemmkörpern (5, 6) angeordnet ist.

## Claims

1. Switchable locking element freewheel with two concentric cage rings (1, 2) and locking elements (5, 6) lodged in pockets (3, 4) thereof, the locking elements (5, 6) changing their locking position as a result of a relative displacement of the cage rings (1, 2), characterized in that at least one of the cage rings (1, 2) comprises a facility (8) which is guided along a surface (7) provided on the other cage ring (2, 1) and inclined relative to the axis of the freewheel so that on relative axial displacement of the cage rings (1, 2), these are rotated relative to each other in the circumferential direction and thus cause a tilting of the locking elements (5, 6) for switching the freewheel.

2. Freewheel according to claim 1, characterized in that the facility (8) is likewise designed as a surface inclined with respect to the freewheel axis.

3. Freewheel according to claim 2, characterized in that the inclined surface (7) and the facility (8), designed as an inclined surface, together form a sliding assembly comprising a groove (7) on one cage ring (2) and a spring (8) on the other cage ring (1).

4. Freewheel according to claim 2, characterized in that the inclined surfaces are made as spatially curved surfaces in a mutually form-fitting or frictional locking relationship which bear against each other after the manner of a helix.

5. Switchable locking element freewheel with two concentric cage rings (1, 2) and locking elements (5, 6) lodged in pockets (3, 4) thereof, the locking elements (5, 6) changing their locking position as a result of a relative displacement of the cage rings (1, 2), characterized in that at least one of the cage rings (1, 2) comprises at least one facility (14, 14a, 16, 16a), and at least one of the locking elements (5, 6) comprises a tapered projection (15, 17) at its axial end facing the facility (14, 14a, 16, 16a), which projection (15, 17) is tapered in the axial direction and comprises a surface (15a,17a) which is inclined relative to the axis of the freewheel so that on relative axial displacement of the cage rings (1, 2), the facility (14, 14a, 16, 16a) is moved along the inclined surface (15a, 17a) with a simultaneous tilting of the locking element (5, 6) for switching the freewheel.

6. Freewheel according to claim 5, characterized in that the facility is constituted by the radial edge (14a, 16a) of an axial cutout (14, 16) made in one of the cage rings (1, 2) and facing a locking element pocket (4), or by a spatially curved surface of the axial cutout (14, 16).

7. Freewheel according to claim 6, characterized in that one (1) of the cage rings comprises two axial cutouts (14, 16) with radial edges (14a, 16a) facing a locking element pocket (4), one (16) of the axial cutouts being arranged at one axial end of the locking element pocket (4) and the other axial cutout (14) being arranged at the other axial end of the locking element pocket (4) in which two locking elements (5, 6), each comprising a projection (15, 17) at its axial end facing the axial cutout (14, 16), are arranged.

8. Freewheel according to claim 6, characterized in that the two axial cutouts (14, 18) are arranged circumferentially offset with respect to each other on different cage rings (1, 2) and the two tapered projections are arranged on the same axial ends of the locking elements (5).

9. Freewheel according to at least one of the preceding claims, characterized by a spring (10, 13) between the two cage rings (1, 2) which acts on these in the axial direction.

10. Freewheel according to claim 9, characterized in that the spring (10) forms a part of the cage ring (2) and presses by its free end axially against the other cage ring (1).

11. Freewheel according to at least one of the preceding claims, characterized in that one of the two cage rings (1, 2) is constituted by individual segments (23, 24), each of these individual segments (23, 24) being arranged between circumferentially adjacent locking elements (5, 6).

## Revendications

1. Roue libre commutable à corps de serrage comprenant deux bagues de cage (1, 2) concentriques l'une à l'autre et, logés dans des poches (3, 4) de celles-ci, des corps de serrage (5, 6) qui, par suite d'un déplacement relatif des bagues de cage (1,2), modifient leur position de serrage, caractérisée en ce qu'au moins une des bagues de cage (1, 2) comprend une installation (8) qui est guidée de telle manière que, lors d'un déplacement axial relatif des bagues de cage (1, 2) le long d'une surface (7) prévue sur l'autre bague de cage respective (1, 2), laquelle surface (7) est inclinée par rapport à l'axe de la roue libre, ces bagues de cage (1, 2) tournent l'une par rapport à l'autre en faisant basculer les corps de serrage (5, 6) pour provoquer une commutation de la roue libre.

2. Roue libre selon la revendication 1, caractérisée en ce que l'installation (8) est également configurée sous la forme d'une surface inclinée par rapport à l'axe de la roue libre.

3. Roue libre selon la revendication 2, caractérisée en ce que la surface inclinée (7) et l'installation (8) sous la forme d'une surface inclinée forment un assemblage à coulisse constitué par une rainure (7) sur l'une (2) des bagues de cage et un ressort (8) sur l'autre bague de cage (1).

4. Roue libre selon la revendication 2, caractérisée en ce que les surfaces inclinées sont configurées sous la forme de surfaces incurvées dans l'espace qui s'appuyent l'une contre l'autre en boudin par concordance de forme ou par friction.

5. Roue libre commutable à corps de serrage comprenant deux bagues de cage (1, 2) concentriques l'une à l'autre et, logés dans des poches (3, 4) de celles-ci, des corps de serrage (5, 6) qui, par suite d'un déplacement relatif des bagues de cage (1, 2), modifient leur position de serrage, caractérisée en ce qu'au moins l'une des bagues de cage (1, 2) comprend au moins une installation (14, 14a, 16, 16a), et qu'au moins l'un des corps de serrage (5, 6) comprend, sur son extrémité axiale qui fait face à l'installation (14, 14a, 16, 16a), un embout (15, 17) qui s'amincit en direction axiale et comprend une surface (15a, 17a) inclinée par rapport à l'axe de la roue libre, de sorte que, lors d'un déplacement axial relatif entre les bagues de cage (1, 2), l'installation (14, 14a, 16, 16a) se déplace le long de la surface inclinée (15a, 17a) en faisant basculer en même temps le corps de serrage (5, 6) pour provoquer une commutation de la roue libre.

6. Roue libre selon la revendication 5, caractérisée en ce que l'installation est constituée par le bord radial (14a, 16a) d'une découpure axiale (14, 16) prévue dans une des bagues de cage (1, 2) et qui fait face à une poche (4) de corps de serrage, ou par une surface incurvée dans l'espace et appartenant à la découpure axiale (14, 16).

7. Roue libre selon la revendication 6, caractérisée en ce que l'une (1) des bagues de cage comprend deux découpures axiales (14, 16) ayant des bords radiaux (14a, 16a) et qui font face à une poche (4) de corps de serrage, l'une (16) des découpures axiales étant prévue sur l'une des extrémités axiales de la poche (4) de corps de serrage et l'autre découpure étant prévue sur l'autre extrémité axiale de ladite poche (4).

8. Roue libre selon la revendication 6, caractérisée en ce que les deux découpures axiales (14, 18) sont agencées sur des bagues (1, 2) différentes de la cage de manière décalée l'une par rapport à l'autre en direction périphérique, et les deux embouts amincis sont agencés sur les mêmes extrémités axiales des corps de serrage (5).

9. Roue libre selon au moins l'une des revendications précédentes caractérisée par un ressort (10, 13) agencé entre les deux bagues de cage (1, 2) et qui agit sur celles-ci en direction axiale.

10. Roue libre selon la revendication 9, caractérisée en ce que le ressort (10) fait partie de l'une (2) des bagues de cage et pousse par son extrémité axiale libre contre l'autre bague de cage (1).

11. Roue libre selon au moins l'une des revendications précédentes, caractérisée en ce que l'une des deux bagues de cage (1, 2) est composée de segments (23, 24) individuels, chacun de ces segments individuels (23, 24) étant agencés entre des corps de serrage (5, 6) voisins l'un à l'autre en direction périphérique.
